# EUROPEAN PATENT SPECIFICATION

(11) **EP 2 359 614 B1**
(45) Date of publication and mention of the grant of the patent: **23.01.2013**
(21) Application number: 09799153.3
(22) Date of filing: 26.11.2009
(51) Int. Cl.: H04W 4/22

(54) **QUEUING MECHANISMS FOR LTE ACCESS AND SAE NETWORKS ENABLING END-TO-END IMS BASED PRIORITY SERVICE**
WARTESCHLEIFENMECHANISMUS FÜR LTE-ZUGANG UND SAE-NETZWERKE ZUR AKTIVIERUNG VON IMS-BASIERTEN END-TO-END-PRIORITÄTSDIENSTEN
MÉCANISMES DE FILE D'ATTENTE (QEUING) POUR ACCÈS LTE ET RÉSEAUX SAE PERMETTANT UN SERVICE DE PRIORITÉ BASÉ SUR UN SYSTÈME IMS DE BOUT EN BOUT

(30) Priority: 26.11.2008 US 118259 P; 08.06.2009 US 185010 P; 26.11.2009 US 626665
(43) Date of publication of application: 24.08.2011
(73) Proprietor: Telefonaktiebolaget LM Ericsson (publ), 164 83 Stockholm (SE)
(72) Inventor: MADOUR, Lila, Kirkland, Québec H9J 3Z8 (CA); SEGURA, Louis, Saint-Laurent, Québec H4L 4C8 (CA); EVANS, Paul J., Montreal, Québec H3X 3R6 (CA)
(74) Representative: Röthinger, Rainer
(86) International application number: PCT/IB2009/055374
(87) International publication number: WO 2010/061353

(56) References cited:
- WO-A1-96/33584
- US-A1- 2005 101 324
- US-A1- 2007 287 473
- CHAMBERS M D ET AL: "IMPLEMENTING WIRELESS PRIORITY SERVICE FOR CDMA NETWORKS" BELL LABS TECHNICAL JOURNAL, WILEY, CA, US LNKD- DOI:10.1002/BLTJ.20023, vol. 9, no. 2, 1 July 2004 (2004-07-01), pages 23-36, XP001224721 ISSN: 1089-7089
- LE FAUCHEUR J POLK CISCO K CARLBERG G11 F: "Resource ReSerVation Protovol (RSVP) Extensions for Emergency Services; draft-ietf-tsvwg-emergency-rsvp-09.txt" RESOURCE RESERVATION PROTOVOL (RSVP) EXTENSIONS FOR EMERGENCY SERVICES; DRAFT-IETF-TSVWG-EMERGENCY-RSVP-09.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. tsvwg, no. 9, 17 October 2008 (2008-10-17), XP015059134
- "3rd Generation Partnership Project; Technical Specification Group Services and System Aspects; Extended Support of IP Multimedia Subsystem (IMS) Emergency Sessions (Release 9)" 3GPP STANDARD; 3GPP TR 23.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.2.0, 1 November 2008 (2008-11-01), pages 1-25, XP050364017

## Description

### TECHNICAL FIELD

This invention relates generally to data flow management in Next Generation Networks (NGN) for preserving priority information.

### BACKGROUND

In emergency situations, such as natural disasters or terrorist attacks, telephony services become essential to the role of first responders. The ability of a first responder to access mobile networks is paramount to the ability to communicate effectively with large groups of people in order to provide a properly coordinated response.

There are two aspects to offering reliable service in such an event. The first is ensuring that there are sufficient resources to allow the responders to utilize the access network. After connecting to the access network, the second issue is ensuring that there are sufficient resources to allow access to the required application. The present invention will address issues related to the second of these problems.

One skilled in the art will appreciate that these issues revolve around the access to Next Generation Network (NGN) enabled with Government Emergency Telecommunications Services (GETS). Because these NGNs typically employ a data-packet based topography, as opposed to the conventional circuit switched telephony network topography, they rely on data services such as IP Multimedia Subsystems (IMS). IMS services are typically established through the use of the Session Initiation Protocol (SIP) between two nodes in a network.

In a conventional system, a user activates GETS functionality by placing a call to a defined number, and after connecting to that service identifies himself using a PIN. At this point the network should provide priority service to the connection. In a conventional circuit switched network, as long as the user is able to obtain a dialtone, the resources needed to place a call are reserved. In an NGN network, it is conceivable that in an emergency situation a user could obtain access to the network and through the network issue a connection request to the application providing GETS services, but that the application would not be able to connect to the user due to congestion on the NGN. This occurs because until the user is authenticated by the application, the connection to the user is not provided with sufficient priority to ensure a connection. Furthermore, queuing of requests at various points between the application and user equipment (UE) can result in lost priority connections if the queuing node does not properly respond to the sender on behalf of the as yet unreached user. In essence, if a node queues requests without keeping the connection to the source node active, the resources dedicated to the connection can be lost.

One source of the above problem is there is no end-to-end signaling support in NGN and LTE that will allow a predictable outcome of a SIP session establishment when queuing within the access resources (radio bearers) is required due to temporary congestion or overload in the evolved-UTRAN Node B (eNB). In addition queuing mechanisms in LTE access are currently not supported.

It is, therefore, desirable to provide a mechanism for ensuring proper handling of requests involving queuing between the application and the UE.

Chambers et al.: "Implementing Wireless Priority Service for CDMA Networks", Bell Labs Technical Journal, Wiley, 1 July 2004, pages 23-36, discloses the capabilities that must be implemented in a code division multiple access (CDMA) network to support a solution referred to as the wireless priority service full operating capability (WPS FOC) to the need of providing personnel with priority access to wireless networks to facilitate disaster response. In particular, a reservation algorithm is used when an emergency telecommunication service request is received and resources required for the requested service are not presently available, and when the emergency telecommunication service request is queued, periodic "keep alive" messages are issued towards the user.

US 2007/0287473 A1 relates to a method and system for performing wireless mobile station location and using resulting locations in services provided to wireless subscribers. In particular, if a service request is not processed within a request specific amount of time, a notification notifying that queuing has been undertaken is issued to the user having requested the service.

F. Le Faucheur et al.: "Resource ReSerVation Protocol (RSVP) Extensions for Emergency Services; draft-ietf-tsvwg-emergengy-rsvp-09.txt", IETF; ISOC 4, rue des Falaises CH-1205 Geneva, Switzerland vol. tsvwg, no. 9, 17 October 2008, specifies extensions to the RSVP that can be used to support an admission priority capability at a network layer, the admission priority leading to either set aside some network resources out of the engineered capacity limits for the emergency services only or allow emergency related sessions to seize additional resources beyond the engineered capacity limits applied to normal sessions.

### SUMMARY

It is an object of the present invention to obviate or mitigate at least one disadvantage of the prior art.

In a first aspect of the present invention, there is provided a method of queuing emergency telecommunication service requests in a packet based telephony network node according to claim 1. Dependent claims 2 to 14 define preferred embodiments.

In a second aspect of the present invention, there is provided a node for use in a packet based telephony network according to independent claim 15.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 illustrates a dataflow involving queuing in an originating eNB (All bearer requests are queued): Network Initiated Resource Reservation;
Figure 2 illustrates a dataflow involving queuing in an originating eNB (All bearer requests are queued): UE Initiated Resource Reservation;
Figure 3 illustrates a dataflow involving queuing in originating eNB (partial successful resource reservation): UE Initiated Resource Reservation;
Figure 4 illustrates a dataflow showing UE Initiated Resource Reservation, network indicates different queuing requirement per media; and
Figure 5 illustrates a dataflow showing queuing in terminating eNB (All bearer requests are queued): UE Initiated Resource Reservation.

### DETAILED DESCRIPTION

The subject matter is directed to allowing the establishment and management of priority for NGN GETS requests in a congested NGN network.

The innovative teachings of the present invention will be described with particular reference to various exemplary uses and aspects of the preferred embodiment. However, it should be understood that this embodiment provides only a few examples of the many advantageous uses of the innovative teachings of the invention. Some statements may apply to some inventive features but not to others. Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

In the present invention, IP Multimedia Subsystem (IMS) mechanisms are employed to provide a queuing mechanism in LTE and NGN networks. When a node determines that congestion will require queuing, messages are sent to other nodes that will be impacted by the delay in establishing a session to ensure that the resources allocated to the session establishment are reserved. This prevents the connection from failing as a result of queuing. Along with the use of IMS mechanism referred to above, an improved receive interface to the P-CSCF (the interface between then Proxy Call Session Control Function (P-CSCF) and the Policy and Charging Rules Function (PCRF)) that allow the use of queuing mechanisms will also be introduced.

In situations where emergency telecommunications services are required, there is typically a high volume of traffic on the network. An emergency situation will often result in the network users connecting to the network to reach friends and family. This network usage results in congestion. Although a radio carrier can be established to a base station, and signaling channels may be obtainable, the resources required to allow a user to connect to the application may not be available. Although pre-emption of existing traffic offers a solution it is not preferred. Queuing the prioritized traffic will often allow the connection to be formed in a very short period as resources that become available are reserved for the queued session. As mentioned above, queuing can cause significant disruption if careful end-to-end considerations are not contemplated.

Queuing for the next available access network resources in eNB and gateway (GW) resources in the IMS user plane control nodes, such as MGCF, MRFC and IBCF is currently not specified in 3GPP standards. Queuing may be needed in the IMS call control nodes as well such as P/S/I-CSCF, BGCF, IBCF. In the alternative, the the capacity and characteristics of those nodes should be engineered so as to handle the priority requests (buffer size, piority processing based on the DSCP marking at the interface and RPH marking at the application).

SIP preconditions can be used. The originating user equipment (UE) and the terminating UE can agree to suspend the session establishment and not alert the terminating UE until the resources are reserved in either both sending and receiving segments or at least in the sending segment.

If a request for a resource is queued in the terminating side, a queuing notification (i.e., SIP 182 message) can be sent to the originator to inform the user/UE that the request is queued to avoid session timeout that may lead to unnecessary queued requests and undesirable outcomes.

If a request for a resource is queued in the originating side following a provisional answer from the terminating side, a queuing notification is sent to the terminating side under certain preconditions status. In one embodiment, a maximum queuing time can be established (e.g. 90 seconds). Ideally, the decision on the queue time would be based on simulation, analysis, or test bed results determined as a function of the system as implemented.

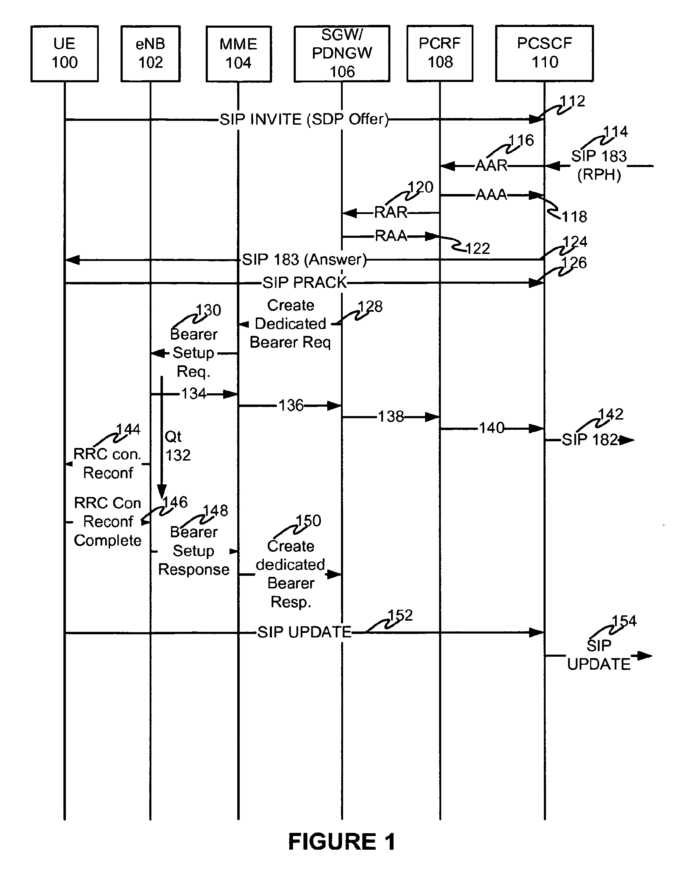

Figure 1 illustrates a signal flow between nodes where queuing at the originating eNB results in a network initiated resource reservation. The UE 100 issues a session description protocol (SDP) offer to proxy Call Session Control Function (P-CSCF) 110 contained in SIP INVITE 112. After this transmission, UE 100 will only send an UPDATE towards the terminating end until all local resources are successfully established. In this scenario, the application requires reservation of two dedicated GBR bearers, and network initiated reservation is used. However, there are no available radio resource bearers in the eNB 102. The eNB 102 is able to queue the dedicated bearer resource requests from the Mobility Management Entity (MME) 104 if a queuing indication is included in the bearer request messages. The queuing indicator can be embedded in the ARP information element.

When the P-CSCF 110 receives SIP 183 114 from the application in response to the SIP INVITE 112 , the SIP 183 will include the preconditions answer as well as the resource priority header (RPH) with ets and wps namespace, the later carries the user priority level in its rvalue as authorized by the application. The P-CSCF 110 interacts with the PCRF 108 sending AA Request 116. The PCRF sends an acknowledgement 118 back to the P-CSCF. A Re-Authentication Request 120 can be sent to the signaling Gateway/Packet Data network Gateway 106, which would then reply with a ReAuthentication Ansswer (RAA) 122. P-CSCF 110 forwards the SIP 183 message 124 to the UE 100. The UE 100 sends a SIP PRACK 126 back and waits for the network to setup the resources. Because this is a Network Initiated Reservation model, the UE 100 will not initiate a NAS Bearer Resource Allocation Request.

Meanwhile, the PCRF 108 performs the QoS mapping and interacts with the PDN GW 106 over Gx interface for resource reservation. The PCRF 108 includes the PCC rules which include the QoS information (ARP, QCI, GBR, MBR) to modify or create one or more dedicated Guaranteed Bit Rate (GBR) bearers. The ARP would include the queuing indicator if the application and/or the user subscription indicate that such priority mechanism should be applied in the event of congestion.

The PDN GW 106 initiates procedure for setting up dedicated GBR bearer(s). When the eNB 102 receives the bearer setup request(s) or reservation request, such as the bearer setup request 130 from MME 104 caused by the Create Dedicated Bearer Request message 128 from signaling gateway (SGW) 106, for that UE 100, it determines that there are no available radio bearer available at this time, and determines from the ARP priority level and queuing indicator that the received request(s) for that UE 100 should be queued for the next available radio bearer resources. The eNB puts 102 the request(s) in a queue, starts a queue timer (Qt) 132 and notifies the MME 104 that the bearer requests are queued using a bearer setup notification message 134.

The MME 104 forwards the queuing status to the SGW/PDN-GW 106 using message 136, and the PDN-GW 106 determines from the action triggers received from the PCRF 108 that it should notify the PCRF 108 if resource requests are queued. It sends the event trigger notification message 138 to the PCRF 108, and the PCRF 108 sends the notification 140 back to the application (P-CSCF 110). The P-CSCF 110 determines from the preconditions that the terminating user is waiting for resources to be setup in the originating side, thus initiates a SIP 182 message 142 back through the IMS chain to the terminating user.

Before Qt 132 expires, resources are freed and eNB 102 resumes the radio bearer resource setup procedure. An RRC con reconfiguration message 144 is sent to the UE 100, which replies with message 146 indicating that the reconfiguration is complete. The bearer setup response 148 is then sent to MME 104, which informs SGW 106 using message 150. Following successful establishment of all the queued GBR bearers requests, the UE 100 sends a SIP UPDATE message 152 to the P-CSCF 110. The P-CSCF 110 stops sending SIP 182 message and forwards the SIP UPDATE message 154 towards the terminating user via the IMS chain. The terminating user is alerted and a SIP 180 is sent to the originating user (not shown).

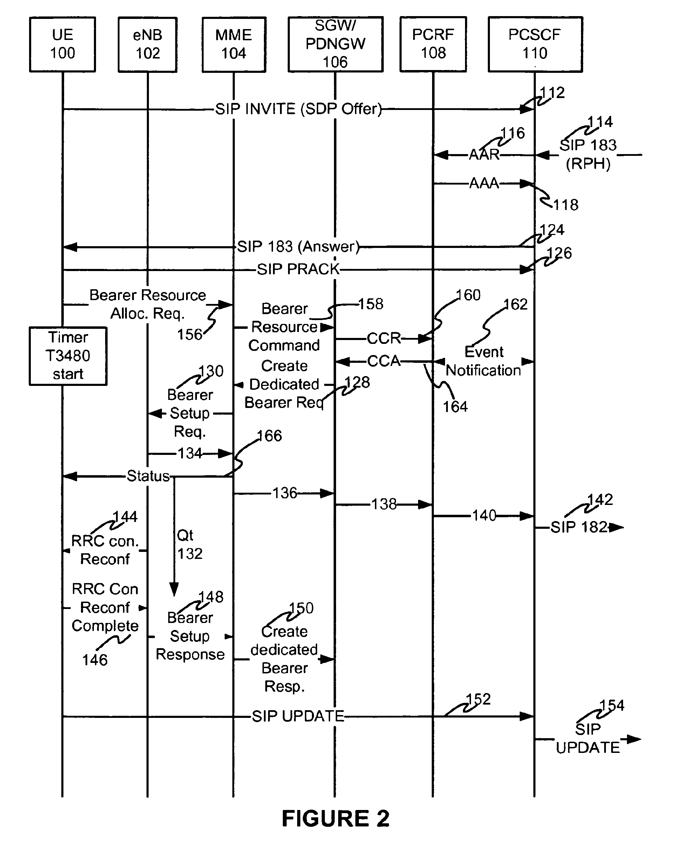

Figure 2 illustrates signal flow between nodes where queuing is initiated at the eNB and all bearer requests are queued. One skilled in the art will appreciate that many of the same signals are sent as were sent in Figure 1. The UE 100 include in the SDP Offer 112 two media lines (voice and video), with mandatory local precondition for both media. The UE 100 will only send an UPDATE towards the terminating end until all local resources are successfully established.

Same conditions as in the call flow of Figure 1 except that a UE 100 initiates resource reservation procedure when it receives the SIP 183 containing the preconditions answer.

When the P-CSCF 110 receives SIP 183 message 114 in response to the SIP INVITE message 112 , the SIP 183 message 114 will include the preconditions answer as well as the RPH with ets and wps namespace, the later carries the user priority level in its rvalue as authorized by the application.

The P-CSCF 110 interacts with the PCRF 108 using message 116. The PCRF 108 sends an acknowledgement 118 back to the P-CSCF 110 and the P-CSCF 110 forwards the SIP 183 message 124 to the UE 100. The UE 100 sends a SIP PRACK 126 and sends a NAS Bearer Resource Allocation Request 156 for each bearer it requires for the application (assume two bearers) to the MME 104 and starts timer T3480 for each.

The MME 104 sends a Bearer Resource Command 158 to the SGW 106 which sends an equivalent message to the PDN GW. The PDN GW 106 interacts with the PCRF 108, which based on its previous interaction with the application function provides the authorization back to the PDN GW106. This interaction takes the form of CCR 160 and CCA 164. Optionally, PCRF 108 can provide an event notification message 162 to P-CSCF 110.

The PDN GW 106 initiates procedure for setting up dedicated GBR bearer(s) by sending message 128 to MME 14, which forwards message 130 to eNB 102. When the eNB 102 receives the bearer setup request(s) 130 (or reservation requests) it determines that there are no available radio bearer available at this time, and determines from the ARP priority level and queuing indicator that the received request(s) should be queued for the next available radio bearer resources. The eNB 102 puts the request(s) in a queue, starts a queue timer (Qt) 132 and preferably notifies the MME 104 that all the dedicated bearer requests for that UE 100 are queued a bearer setup queuing notification message 134.

In a presently preferred embodiment, the default value for the NAS Bearer Resource Allocation Request timer (T3480) in the UE 100 is 8s. If the eNB 102 queues the reservation requests from the MME 104 for more than 8 seconds the timer will expire and the UE 100 sends a new bearer allocation request. In some embodiments it is desirable to send a NAS status 166 back to the UE 100 from the MME 104 to inform that the bearer request is being queued.

The MME 104 forwards the queuing status 136 to the SGW/PDN-GW 106, and the PDN-GW 106 determines from the action triggers received from the PCRF 108 that it should notify the PCRF 108 if resource requests are queued. It sends the event trigger notification message 138 to the PCRF 108, and the PCRF 108 sends the notification 140 back to the application (P-CSCF) 110. The P-CSCF 110 determines from the preconditions that the terminating user is waiting for resources to be setup in the originating side, thus initiates a SIP 182 message 142back through the IMS chain to the terminating user.

Before Qt 132expires, resources are freed and eNB 104 resumes the radio bearer resource setup procedure outlined above with messages 144, 146, 148 and 150. Following successful establishment of all the requested GBR bearer requests, the UE 100 sends a SIP UPDATE message 152 to the P-CSCF 110. The P-CSCF 110 stops sending SIP 182 message 142 and forwards the SIP UPDATE 154 towards the terminating user via the IMS chain. The terminating user is alerted and a SIP 180 is sent to the originating user (not shown).

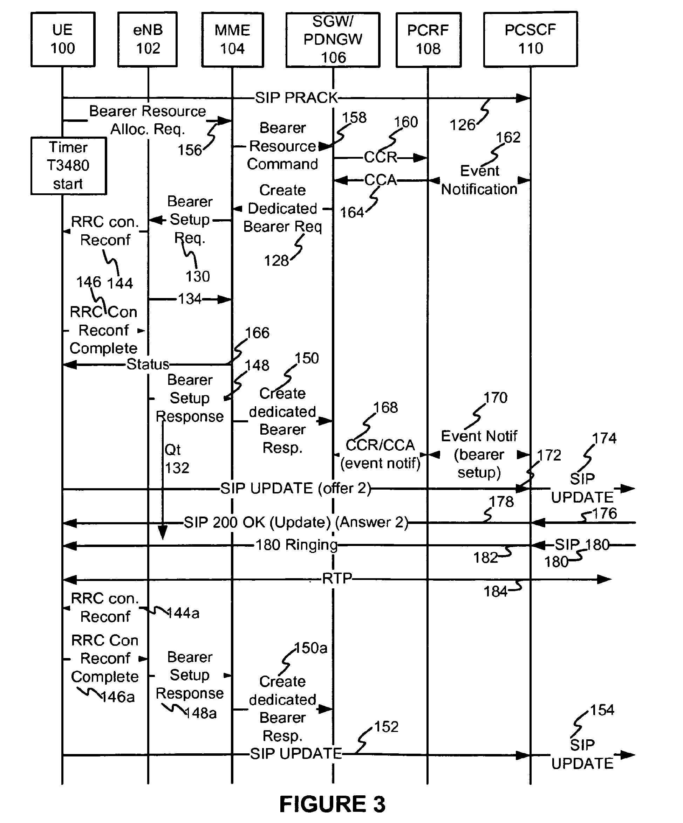

Figure 3 illustrates the call flow when queuing in the originating eNB arises as a result of a partially successful resource reservation. The UE 100 include in the SDP Offer 112 two media lines (voice and video), with mandatory local precondition for the voice media and optional local precondition for video media. Same conditions as in the call flow of Figure 1 except that a UE 100 initiates resource reservation procedure when it receives the SIP 183 message containing the preconditions answer.

As before, but omitted from Figure 3 for clarity and simplicity, When the P-CSCF 110 receives SIP 183 message in response to the SIP INVITE, the SIP 183 will include the preconditions answer as well as the RPH with ets and wps namespace, the later carries the user priority level in its rvalue as authorized by the application.

The P-CSCF 110 interacts with the PCRF 108. The PCRF 108sends an acknowledgement back to the P-CSCF 110 and the P-CSCF 110 forwards the SIP 183 answer message to the UE 100. The UE 100 sends a SIP PRACK 126 and sends a NAS Bearer Resource Allocation Request 156 for each bearer it requires for the application (assume two bearers) to the MME 104 and starts timer T3480 for each requests (it seems that the NAS message includes information only for one bearer).

The MME 104 sends a Bearer Request Command 158 to the SGW 106 which sends an equivalent message to the PDN GW. The PDN GW 106 interacts with the PCRF 108, which based on its previous interaction with the application function provides the authorization back to the PDN GW 106. As before, this interaction takes the form of CCR 160 and CCA 164, with PCRF 108 optionally sending Event Notification 162 as before.

The PDN GW 106 initiates the procedure for setting up two dedicated GBR bearer(s) by sending the Create Dedicated Bearer Request 128 to MME 104. When the eNB 102 receives the bearer setup request(s) 130 from MME 104 it determines that there are sufficient resources to setup only one of the GBR radio bearer, and determines from the ARP priority level and queuing indicator the request that should be queued for the next available radio bearer. The eNB 102 establishes one of the radio bearers using message 144, puts the additional request in a queue, starts a queue timer (Qt) 132 and notifies the MME 104 that one of the bearer requests is queued.

In a presently preferred embodiment, the default value for the NAS Bearer Resource Allocation Request timer T3480 in the UE is 8s. If the eNB 102 queues the second bearer setup request for more than 8 seconds, the timer will expire and the UE 100 will send a new request. It may, in some embodiments, be desirable to send a NAS status message 166 back to the UE 100 from the MME 104 to inform that the second bearer request status is being queued.

Because one of the bearer requests is queued and only one of the media bearer is established, the MME 104 determines based on the event trigger received from the SGW 106 if queuing notification should be sent from MME 104 to SGW 106. The event trigger may indicate queuing notification if all or a required bearer reservation request is queued. The following alternatives may be possible:
1. If the UE 100 has indicated in the SDP offer (in the INVITE) that local preconditions for all media streams must be met, the P-CSCF 110 would include a queuing action trigger over the Rx interface when it interacts with the P-CSCF 110. Subsequently, if only one media bearer has been setup, while the other media bearer request is queued, then the MME 104 forwards the queuing status to the SGW/PDN-GW 106, and the PDN-GW 106 determines from the action triggers that it should notify the PCRF 108 (using message 168). The PCRF 108 sends the notification back to the application P-CSCF 110 through notification 170. The P-CSCF 110 initiates a SIP 182 message (not shown) back through the IMS chain to the terminating user.
2. As shown in Figure 3, if the UE 100 includes mandatory precondition for one media stream (e.g., voice), but includes an optional precondition (or normal SDP) for the another media (e.g., video), the P-CSCF 110 would include over the Rx interface a queuing action trigger only for the media stream that is mandated in the precondition. Subsequently, if the media bearer request 130 associated to the optional precondition is queued, the MME 104 will not forward the queuing notification uplink to the SGW 106 as would be indicated by the action trigger previously received from the SGW 106.

As shown in Figure 3, the eNB 102 successfully established the required radio bearer (i.e., as required by the mandatory precondition and as indicated by message 146). The UE 100 sends a SIP UPDATE message 172 which includes a new SDP offer that does not include the video media line to the P-CSCF 110. The P-CSCF 110 forwards SIP UPDATE 174 to the terminating user through the IMS chain. The terminating user sends a 200 OK message 176 for the UPDATE that includes an SDP answer, followed by a SIP 180 message 180 indicating that the terminating user has been alerted. A SIP 200 OK message 178 is sent from the terminating end as is a SIP 180 message 182. An RTP session 184 can be established and voice packets can be exchanged over the RTP bearer.

Before Qt 132 expires in the eNB 102, resources are freed and eNB 102 resumes the radio bearer resource setup procedure for the second bearer using message 144a. Following successful establishment of the second GBR bearer as indicated by the transmission of messages 146a, 148a and 150a, the UE 100 sends a SIP UPDATE message 152with a new SDP offer to the P-CSCF 110. The P-CSCF 110 forwards the UPDATE message 154 towards the terminating user via the IMS chain. If the terminating user accepts the SDP offer, it responds with a 200 OK (not shown) which includes an SDP answer that may indicate that the resources are ready at the terminating end, and starts a second RTP video media stream.

In some situations, the UE 100 can give up on the video bearer if the important voice bearer is established and the network indicates that the video bearer request is queued in the network. The UE 100 may send a NAS Resource cancellation/release request which will then inform the eNB 102 to remove the request from the queue.

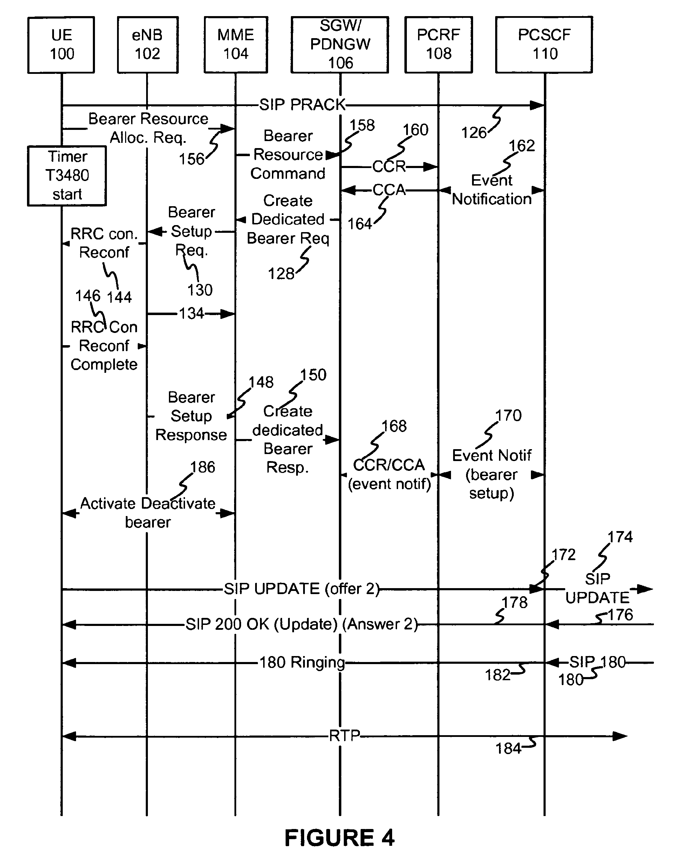

Another alternative could be that media that are associated to a precondition tagged as optional or media included in normal SDP will not require queuing. This can require signaling by the P-CSCF 110 to the PCRF 108 indicating the queuing requirement per media based on the precondition strength or on whether preconditions are used for a media line. This alternative is illustrated in the high level diagram of Figure 4.

The terminating UE 100 include in the SDP Answer (not shown) two media lines (voice and video), with mandatory local precondition for both media. The UE 100 will only send a SIP 180 towards the originating end until all local resources are successfully established and the preconditions in the originating end are met.

SIP 182 may be sent from the P-CSCF after it receives a SIP UPDATE from the originating UE 100 or after it receiving the queuing event notification from the PCRF 110.

The call flow follows the same process outlined in Figure 3, where identical calls are referred to using the same reference numerals. The processes are the same until message 170. Prior to sending SIP UPDATE (offer 2) message 172, UE 100 and MME 104 exchange activation/deactivation bearer messages 186, allowing for the request for the unavailable channel to be dropped.

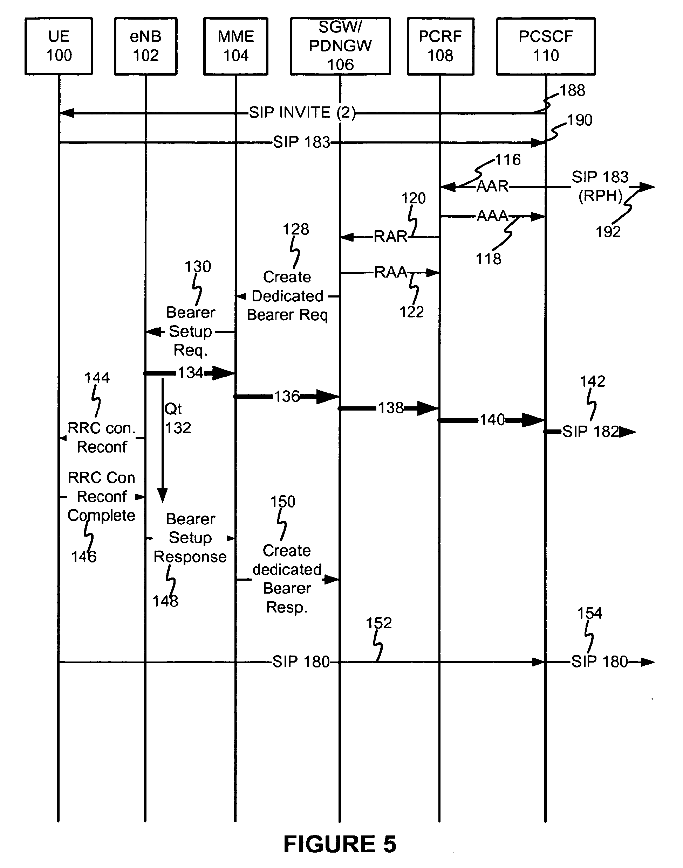

Figure 5 illustrates a message flow for the reservation of two dedicated GBR bearers, and network initiated reservation is used. However, there are no available radio resource bearers in the terminating eNB 102. The terminating eNB 102 is able to queue the dedicated bearer resource requests from the MME 104 if a queuing indication is included in the bearer request messages. The queuing indicator can be embedded in the ARP information element.

As this call flow is network initiated, SIP INVITE (2) message 188 is sent from P-CSCF 110 to UE 100. When the P-CSCF 100 receives SIP 183 message 190from the terminating UE 100 in response to the SIP INVITE message 188, the SIP 183 message 190 will include the preconditions answer as well as the RPH with ets and wps namespace, the later carries the orgnating user priority level in its rvalue as authorized by the application in the originating network.

The P-CSCF 110 interacts with the PCRF 108 using AAR 116. The PCRF sends an acknowledgement AAA 118 back to the P-CSCF 110 and the P-CSCF 110 forwards the SIP 183 message 192 to the originating UE through the IMS chain. The PCRF 108 performs the QoS mapping and interacts with the PDN GW 106 over Gx interface for resource reservation using messages RAR 120 and RAA 122. The PCRF 108 includes the PCC rules which include the QoS information (ARP, QCI, GBR, MBR) to modify or create one or more dedicated GBR bearers. The ARP would include the queuing indicator if the application and/or the user subscription indicate that such priority mechanism should be applied in the event of congestion.

The PDN GW 106 initiates procedure for setting up dedicated GBR bearer(s) by sending create dedicated bearer request 128. When the eNB 102 receives the bearer setup request(s) 130 it determines that there are no available radio bearer available at this time, and determines from the ARP priority level and queuing indicator that all the received request(s) should be queued for the next available radio bearer resources. The eNB puts the request(s) in a queue, starts a queue timer (Qt) 132 and then optionally notifies the MME 104 that all bearer requests are queued using message 134.

The MME 104 forwards the queuing status 136 to the SGW/PDN-GW 106, and the PDN-GW 106 determines from the action triggers received from the PCRF 108 that it should notify the PCRF 108 if resource requests are queued. It sends the event trigger notification message 138 to the PCRF 108, and the PCRF 108 sends the notification back to the application (P-CSCF) 110 as message 142. The P-CSCF 110 determines from the preconditions if the originating user is waiting for resources to be setup in the terminating side, if so, it initiates a SIP 182 message 142 back through the IMS chain to the originating user.

Before Qt 132 expires, resources are freed and eNB 102 can resume the radio bearer resource setup procedure using messages 144, 146, 148 and 150 as described above. Following successful establishment of the GBR bearers, the UE 100 sends a SIP 180 message 152 to the P-CSCF 110. The P-CSCF 110 forwards the SIP 180 message 154towards the originating user via the IMS chain.

By providing a mechanism that informs nodes awaiting a session initialization that queuing has been undertaken, and resources should be reserved, in conjunction with a defined timer to prevent indefinite queuing, the system and method of the present invention allow for a smooth and transparent support of queuing for resources in the packet based access network when resources are requested by an application, without causing disruption in the end-to-end session establishment or disruption to end user experience.

In the present invention, the eNB is the node that determines whether or not queuing is required. The eNB of the present invention is thus able to determine resource availability, and can generate queuing notification requests that are propagated into the IMS chain towards the P-CSCF. One skilled in the art will appreciate that this can be achieved through the use of a resource availability engine that can either determine resource availability on its own or obtain the availability information from other network elements. Based on the availability, a decision to queue the requests can be made, and a timer started. Queuing can then trigger a messaging interface to issue queuing notification messages to be sent to upstream nodes. Those skilled in the art will appreciate that this can be achieved in a number of different ways including the use of dedicated hardware or software controlled general purpose computing platforms.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method of queuing emergency telecommunication service requests in a packet based telephony network, wherein the method is performed in a packet based telephony network node and comprises the following steps:
receiving a request for an emergency telecommunication service between a wireless User Equipment (UE, 100) and an emergency telecommunication service application;
determining that resources required for the requested emergency telecommunication service between the wireless User Equipment (UE, 100) and the emergency telecommunication service application are not presently available;
queuing the request for the emergency telecommunication service; and
reserving available resources for the requested emergency telecommunication service;
**characterized in that** the method further comprises:
issuing a notification (134, 136, 138, 140, 142) from the packet based telephony network node (102) towards the emergency telecommunication service application indicating that queuing has been undertaken.

2. The method of claim 1 wherein the packet based telephony network node is an evolved-UTRAN node B (eNB).

3. The method of claim 2 wherein the step of determining includes determining that the wireless User Equipment (UE, 100) cannot be reached due to network congestion.

4. The method of claim 2 further including the step of initializing a timer (132).

5. The method of claim 4 further including the step of cancelling the reservation of the available resources upon expiry of the timer (132).

6. The method of claim 2 further including the step of initiating the requested emergency telecommunication service upon acquiring sufficient reserved available resources.

7. The method of claim 1 wherein the request for the emergency telecommunication service includes a request for a plurality of emergency telecommunication services.

8. The method of claim 7 wherein an indication is received that indicates that sufficient resources are available for one of the requested plurality of emergency telecommunication services.

9. The method of claim 8 further including the step of initializing one of the requested plurality of emergency telecommunication services using the available resources and wherein the step of queuing includes queuing the request for the emergency telecommunication services in the requested plurality of emergency telecommunication services not initialized.

10. The method of claim 9 further including initializing a timer (132) and upon expiry of the timer (132) dropping the queued request for emergency telecommunication services in the requested plurality of emergency telecommunication services not initialized.

11. The method of claim 1 wherein the step of issuing a notification (134, 136, 138, 140, 142) from the packet based telephony network node (102) towards the emergency telecommunication service application includes receiving at a mobility management entity (MME, 104) a message (134) from the packet based telephony network node (102) indicating that the request for the emergency telecommunication service has been queued and forwarding from the mobility management entity (MME, 104) and in response to the received message from the packet based telephony network node (102) a notification (136) to a signaling gateway (SGW, 106).

12. The method of claim 1 wherein the step of issuing a notification (134, 136, 138, 140, 142) from the packet based telephony network node (102) towards the emergency telecommunication service application includes receiving at a signaling gateway (SGW, 106) a message (136) from a mobility management entity (MME, 104) indicating that the request for the emergency telecommunication service has been queued and forwarding from the signaling gateway (SGW, 106) and in response to the received message from the mobility management entity (MME, 104) a notification (138) to a policy and charging rule function (PCRF, 108).

13. The method of claim 1 wherein the step of issuing a notification (134, 136, 138, 140, 142) from the packet based telephony network node (102) towards the emergency telecommunication service application includes receiving at a policy and charging rule function (PCRF, 108) a message (138) from a signaling gateway (SGW, 106) indicating that the request for the emergency telecommunication service has been queued and forwarding from the policy and charging rule function (PCRF, 108) and in response to the received message from the signaling gateway (SGW, 106) a notification (140) to a Proxy Call Session Control Function (P-CSCF, 110).

14. The method of claim 1 wherein the step of issuing a notification (134, 136, 138, 140, 142) from the packet based telephony network node (102) towards the emergency telecommunication service application includes receiving at a Proxy Call Session Control Function (P-CSCF, 110) a message (140) from a policy and charging rule function (PCRF, 108) indicating that the request for the emergency telecommunication service has been queued and forwarding from the Proxy Call Session Control Function (P-CSCF, 110) and in response to the received message from the policy and charging rule function (PCRF, 108) a notification (142) to the emergency telecommunication service application.

15. A node for use in a packet based telephony network, the node being a packet based telephony network node (102) that comprises:
a request interface configured to receive a request for an emergency telecommunication service between a wireless User Equipment (UE, 100) and an emergency telecommunication service application;
a resource availability engine configured to determine the availability of the resources required for the requested emergency telecommunication service between the wireless User Equipement (UE, 100) and the emergency telecommunication service application; and
a processor operatively connected to the resource availability engine and the request interface, configured to determine in accordance with the present availability of the resources required for the requested emergency telecommunication service as determined by the resource availability engine whether or not the request for the emergency telecommunication service should be queued and to reserve available resources for the requested emergency telecommunication service upon determination by the processor that the request for the emergency telecommunication service is to be queued;
**characterized in that** the node further comprises:
a messaging interface configured to issue a notification (134, 136, 138, 140, 142) towards said emergency telecommunication service application indicating that the request for the emergency telecommunication service has been queued upon determination by the processor.

16. The node of claim 15 wherein the processor is configured to determine that the resources required to fulfill the requested emergency telecommunication service are not available and to subsequently queue the request for the emergency telecommunication service and to reserve the required resources.

## Patentansprüche

1. Verfahren zum Einreihen von Notfalltelekommunikationsdienstanforderungen in eine Warteschlange in einem paketbasierten Telefonienetzwerk, wobei das Verfahren in einem paketbasierten Telefonienetzwerkknoten durchgeführt wird und die folgenden Schritte umfasst:
Empfangen einer Anforderung für einen Notfalltelekommunikationsdienst zwischen einer drahtlosen Benutzereinrichtung (UE, 100) und einer Notfalltelekommunikationsdienstanwendung;
Bestimmen, dass Ressourcen, die für den angeforderten Notfalltelekommunikationsdienst zwischen der drahtlosen Benutzereinrichtung (UE, 100) und der Notfalltelekommunikationsdienstanwendung erforderlich sind, momentan nicht zur Verfügung stehen;
Einreihen der Anforderung für den Notfalltelekommunikationsdienst in eine Warteschlange;
Reservieren von zur Verfügung stehenden Ressourcen für den angeforderten Notfalltelekommunikationsdienst;
**dadurch gekennzeichnet, dass** das Verfahren weiterhin umfasst:
Absetzen einer Benachrichtigung (134, 136, 138, 140, 142), von dem paketbasierten Telefonienetzwerkknoten (102) hin zu der Notfalltelekommunikationsdienstanwendung, die angibt, dass das Einreihen stattgefunden hat.

2. Verfahren gemäß Anspruch 1, wobei der paketbasierte Telefonienetzwerkknoten ein weiterentwickelter UTRAN-B-Knoten (eNB) ist.

3. Verfahren gemäß Anspruch 2, wobei der Schritt Bestimmen das Bestimmen umfasst, dass die drahtlose Benutzereinrichtung (UE, 100) aufgrund eines Netzwerkstaus nicht erreicht werden kann.

4. Verfahren gemäß Anspruch 2, weiterhin umfassend den Schritt Initialisieren eines Zeitgebers (132).

5. Verfahren gemäß Anspruch 4, weiterhin umfassend den Schritt Abbrechen der Reservierung der zur Verfügung stehenden Ressourcen bei Ablauf des Zeitgebers (132).

6. Verfahren gemäß Anspruch 2, weiterhin umfassend den Schritt Initiieren des angeforderten Notfalltelekommunikationsdienstes bei Erlangung von ausreichenden reservierten zur Verfügung stehenden Ressourcen.

7. Verfahren gemäß Anspruch 1, wobei die Anforderung für den Notfalltelekommunikationsdienst eine Anforderung für eine Vielzahl von Notfalltelekommunikationsdiensten umfasst.

8. Verfahren gemäß Anspruch 7, wobei eine Angabe empfangen wird, die angibt, dass ausreichende Ressourcen für einen der angeforderten Vielzahl von Notfalltelekommunikationsdiensten zur Verfügung stehen.

9. Verfahren gemäß Anspruch 8, weiterhin umfassend den Schritt Initialisieren eines der angeforderten Vielzahl von Notfalltelekommunikationsdiensten unter Verwendung der zur Verfügung stehenden Ressourcen, und wobei der Schritt Einreihen in die Warteschlange umfasst Einreihen der Anforderung für die Notfalltelekommunikationsdienste in die Warteschlange in die angeforderte Vielzahl von Notfalltelekommunikationsdiensten, die nicht initialisiert sind.

10. Verfahren gemäß Anspruch 9, weiterhin umfassend Initialisieren eines Zeitgebers (132), und bei Ablauf des Zeitgebers (132), Verwerfen der eingereihten Anforderung für Notfalltelekommunikationsdienste in der angeforderten Vielzahl von Notfalltelekommunikationsdiensten, die nicht initialisiert sind.

11. Verfahren gemäß Anspruch 1, wobei der Schritt Absetzen einer Benachrichtigung (134, 136, 138, 140, 142) von dem paketbasierten Telefonienetzwerkknoten (102) hin zu der Notfalltelekommunikationsdienstanwendung umfasst Empfangen, bei einer Mobilitätsverwaltungsfunktionseinheit (MME, 104), einer Nachricht (134) von dem paketbasierten Telefonienetzwerkknoten (102), die angibt, dass die Anforderung für den Notfalltelekommunikationsdienst in die Warteschlange eingereiht wurde, und Weiterleiten, von der Mobilitätsverwaltungsfunktionseinheit (MME, 104) und in Antwort auf die empfangene Nachricht von dem paketbasierten Telefonienetzwerkknoten (102), einer Benachrichtigung (136) zu einem Signalisierungsgateway (SGW, 106).

12. Verfahren gemäß Anspruch 1, wobei der Schritt Absetzen einer Benachrichtigung (134, 136, 138, 140, 142) von dem paketbasierten Telefonienetzwerkknoten (102) hin zu der Notfalltelekommunikationsdienstanwendung umfasst Empfangen, bei einem Signalisierungsgateway (SGW, 106), einer Nachricht (136) von einer Mobilitätsverwaltungsfunktionseinheit (MME, 104), die angibt, dass die Anforderung für den Notfalltelekommunikationsdienst in die Warteschlange eingereiht wurde, und Weiterleiten, von dem Signalisierungsgateway (SGW, 106) und in Antwort auf die empfangene Nachricht von der Mobilitätsverwaltungsfunktionseinheit (MME, 104), einer Benachrichtigung (138) zu einer Verfahrensweisen- und Kostenregelungsfunktion (PCRF, 108).

13. Verfahren gemäß Anspruch 1, wobei der Schritt Absetzen einer Benachrichtigung (134, 136, 138, 140, 142) von dem paketbasierten Telefonienetzwerkknoten (102) hin zu der Notfalltelekommunikationsdienstanwendung umfasst Empfangen, bei einer Verfahrensweisen- und Kostenregelungsfunktion (PCRF, 108), einer Nachricht (138) von einem Signalisierungsgateway (SGW, 106), die angibt, dass die Anforderung für den Notfalltelekommunikationsdienst in die Warteschlange eingereiht wurde, und Weiterleiten, von der Verfahrensweisen- und Kostenregelungsfunktion (PCRF, 108) und in Antwort auf die empfangene Nachricht von dem Signalisierungsgateway (SGW, 106), einer Benachrichtigung (140) zu einer Proximitätsrufsitzungssteuerfunktion (P-CSCF, 110).

14. Verfahren gemäß Anspruch 1, wobei der Schritt Absetzen einer Benachrichtigung (134, 136, 138, 140, 142) von dem paketbasierten Telefonienetzwerkknoten (102) hin zu der Notfalltelekommunikationsdienstanwendung umfasst Empfangen, bei einer Proximitätsrufsitzungssteuerfunktion (P-CSCF, 110), einer Nachricht (140) von einer Verfahrensweisen- und Kostenregelungsfunktion (PCRF, 108), die angibt, dass die Anforderung für den Notfalltelekommunikationsdienst in die Warteschlange eingereiht wurde, und Weiterleiten, von der Proximitätsrufsitzungssteuerfunktion (P-CSCF, 110) und in Antwort auf die empfangene Nachricht von der Verfahrensweisen- und Kostenregelungsfunktion (PCRF, 108), einer Benachrichtigung (142) zu der Notfalltelekommunikationsdienstanwendung.

15. Knoten zur Verwendung in einem paketbasierten Telefonienetzwerk, wobei der Knoten ein paketbasierter Telefonienetzwerkknoten (102) ist, der umfasst:
eine Anforderungsschnittstelle, die konfiguriert ist, um eine Anforderung für einen Notfalltelekommunikationsdienst zwischen einer drahtlosen Benutzereinrichtung (UE, 100) und einer Notfalltelekommunikationsdienstanwendung zu empfangen;
eine Ressourcenverfügbarkeits-Maschine, die konfiguriert ist, um die Verfügbarkeit der Ressourcen zu bestimmen, die für den angeforderten Notfalltelekommunikationsdienst zwischen der drahtlosen Benutzereinrichtung (UE, 100) und der Notfalltelekommunikationsdienstanwendung erforderlich sind; und
einen Prozessor, der betriebsfähig mit der Ressourcenverfügbarkeits-Maschine und der Anforderungsschnittstelle verbunden ist und der konfiguriert ist, um gemäß der momentanen Verfügbarkeit der Ressourcen, die für den angeforderten Notfalltelekommunikationsdienst verfügbar sind, wie durch die Ressourcenverfügbarkeits-Maschine bestimmt, zu bestimmen, ob die Anforderung für den Notfalltelekommunikationsdienst in eine Warteschlange eingereiht werden soll oder nicht, und um zur Verfügung stehende Ressourcen für den angeforderten Notfalltelekommunikationsdienst bei Bestimmung durch den Prozessor zu reservieren, dass die Anforderung für den Notfalltelekommunikationsdienst in einer Warteschlange einzureihen ist;
**dadurch gekennzeichnet, dass** der Knoten weiterhin umfasst:
eine Nachrichtenschnittstelle, die konfiguriert ist, um eine Benachrichtigung (134, 136, 138, 140, 142) hin zu der Notfalltelekommunikationsdienstanwendung abzusetzen, die angibt, dass die Anforderung für den Notfalltelekommunikationsdienst bei Bestimmung durch den Prozessor in einer Warteschlange eingereiht wurde.

16. Knoten gemäß Anspruch 15, wobei der Prozessor konfiguriert ist, um zu bestimmen, dass die Ressourcen, die zum Erfüllen des angeforderten Notfalltelekommunikationsdiensts erforderlich sind, nicht zur Verfügung stehen und um daraufhin die Anforderung für den Notfalltelekommunikationsdienst in einer Warteschlange einzureihen und um die erforderlichen Ressourcen zu reservieren.

## Revendications

1. Procédé de mise en file d'attente de demandes de service de télécommunication d'urgence dans un réseau de téléphonie basé sur des paquets, dans lequel le procédé est mis en oeuvre dans un noeud de réseau de téléphonie basé sur des paquets et comprend les étapes suivantes de :
recevoir une demande d'un service de télécommunication d'urgence entre un équipement d'utilisateur (UE,100) sans fil et une application de service de télécommunication d'urgence ;
déterminer que desressources demandées pour le service de télécommunication d'urgence demandé entre l'équipement d'utilisateur sans fil (UE,100) et l'application de service de télécommunication d'urgence ne sont pas actuellement disponibles ;
mettre en file d'attente la demande du service de télécommunication d'urgence ; et
réserver des ressources disponibles pour le service de télécommunication d'urgence demandé ;
**caractérisé en ce que** le procédé comprend en outre de :
émettre une notification (134,136,138,140,142) du noeud de réseau de téléphonie basé sur paquets (102) vers l'application de service de télécommunication d'urgence indiquant que la mise en file d'attente a été entreprise.

2. Procédé selon la revendication 1, dans lequel le noeud de réseau de téléphonie basé sur paquets est un noeud B UTRAN évolué (eNB).

3. Procédé selon la revendication 2, dans lequel l'étape de déterminer inclut de déterminer que l'équipement d'utilisateur sans fil (UE,100) ne peut pas être atteint en raison de l'engorgement du réseau.

4. Procédé selon la revendication 2, incluant en outre l'étape d'initialisation d'un temporisateur (132).

5. Procédé selon la revendication 4, incluant en outre l'étape d'annulation de la réservation des ressources disponibles à l'expiration du temporisateur (132).

6. Procédé selon la revendication 2, incluant en outre l'étape d'amorce du service de télécommunication d'urgence demandé lors de l'acquisition de suffisamment de ressources disponibles réservées.

7. Procédé selon la revendication 1, dans lequel la demande du service de télécommunication d'urgence inclut une demande d'une pluralité de services de télécommunication d'urgence.

8. Procédé selon la revendication 7, dans lequel une indication est reçue que des ressources suffisantes sont disponibles pour un de la pluralité de services de télécommunication d'urgence demandés.

9. Procédé selon la revendication 8, incluant en outre l'étape d'amorcer d'un de la pluralité de services de télécommunication d'urgence demandés en utilisant les ressources disponibles et dans lequel l'étape de mise en file d'attente inclut de mettre en file d'attente la demande de services de télécommunication d'urgence dans la pluralité de services de télécommunication d'urgence non initialisée demandée.

10. Procédé selon la revendication 9, incluant d'initialiser un temporisateur (132) et à l'expiration du temporisateur (132) d'abandonner la demande de services de télécommunication d'urgence mis en file d'attente dans la pluralité demandée de services de télécommunication d'urgence non initialisée.

11. Procédé selon la revendication 1, dans lequel l'étape d'émission d'une notification (134,136,138,140,142) depuis le noeud de réseau de téléphonie basé sur paquets (102) vers l'application de service de télécommunication d'urgence inclut de recevoir au niveau d'une entité de gestion de mobilité (MME,104) un message (134) émanant du noeud de réseau de téléphonie basé sur paquets (102) indiquant que la demande du service de télécommunication d'urgence a été mise en file d'attente et d'acheminer depuis l'entité de gestion de mobilité (MME, 104) et en réponse au message reçu depuis le noeud de réseau de téléphonie basé sur paquets (102) une notification (136) à une passerelle de signalisation (SGW,106).

12. Procédé selon la revendication 1, dans lequel l'étape d'émission d'une notification (134,136,138,140,142) depuis le noeud de réseau de téléphonie basé sur paquets (102) vers l'application de service de télécommunication d'urgence inclut de recevoir au niveau d'une passerelle de signalisation (SGW,106) un message (136) émanant d'une entité de gestion de mobilité (MME,104) indiquant que la demande du service de télécommunication d'urgence a été mise en file d'attente et d'acheminer depuis la passerelle de signalisation (SGW,106) et en réponse au message reçu depuis l'entité de gestion de mobilité (MME,104) une notification (138) à une fonction de politique et règle de facturation (PCRF,108).

13. Procédé selon la revendication 1, dans lequel l'étape d'émission d'une notification (134,136,138,140,142) depuis le noeud de réseau de téléphonie basé sur paquets (102) vers l'application de service de télécommunication d'urgence inclut de recevoir au niveau d'une fonction de politique et de règle de facturation (PCRF,108) un message (138) émanant d'une passerelle de signalisation (SGW,106) indiquant que la demande du service de télécommunication d'urgence a été mise en file d'attente et d'acheminer depuis la fonction de politique et de règle de facturation (PCRF,108) et en réponse au message reçu depuis la passerelle de signalisation (SGW,106) une notification (140) à une fonction de commande de session d'appel de mandataire (P-CSCF, 110).

14. Procédé selon la revendication 1, dans lequel l'étape d'émission d'une notification (134,136,138,140,142) depuis le noeud de réseau de téléphonie basé sur paquets (102) vers l'application de service de télécommunication d'urgence inclut de recevoir au niveau d'une fonction de commande de session d'appel de mandataire (P-CSCF,110) un message (140) provenant d'une fonction de politique et de règle de facturation (PCRF,108) indiquant que la demande du service de télécommunication d'urgence a été mise en file d'attente et d'acheminer depuis la fonction de commande de session d'appel de mandataire (P-CSCF,110) et en réponse au message reçu depuis la fonction de politique et de règle de facturation (PCRF,108) une notification (142) à l'application de service de télécommunication d'urgence.

15. Noeud à utiliser dans un réseau de téléphonie basée sur paquets, le noeud étant un noeud de réseau de téléphonie basé sur paquets (102) qui comprend :
une interface de demande configurée afin de recevoir une demande d'un service de télécommunication d'urgence entre un équipement d'utilisateur sans fil (UE,100) et une application de service de télécommunication d'urgence ;
un moteur de disponibilité de ressource configuré afin de déterminer la disponibilité des ressources demandées pour le service de télécommunication d'urgence demandé entre l'équipement d'utilisateur sans fil (UE,100) et l'application de service de télécommunication d'urgence ; et
un processeur connecté opérationnellement au moteur de disponibilité de ressources et à l'interface de demande, configuré afin de déterminer conformément à la disponibilité actuelle des ressources demandées pour le service de télécommunication d'urgence demandé tel que déterminé par le moteur de disponibilité de ressources si oui ou non la demande du service de télécommunication d'urgence devrait être mise en file d'attente et de réserver des ressources disponibles pour le service de télécommunication d'urgence demandé lors de la détermination par le processeur que la demande du service de télécommunication d'urgence doit être mise en file d'attente ;
**caractérisé en ce que** le noeud comprend en outre :
une interface de messagerie configurée afin d'émettre une notification (134,136,138,140,142) vers ladite application de service de télécommunication d'urgence indiquant que la demande du service de télécommunication d'urgence a été mise en file d'attente lors de la détermination par le processeur.

16. Noeud selon la revendication 15, dans lequel le processeur est configuré afin de déterminer que les ressources demandées pour satisfaire le service de télécommunication d'urgence demandé ne sont pas disponibles et de mettre en file d'attente subséquemment la demande du service de télécommunication d'urgence et de réserver les ressources demandées.
